# FASCICULE DE BREVET EUROPEEN

(11) **EP 0 968 450 B1**
(45) Date de publication et mention de la délivrance du brevet: **16.01.2002**
(21) Numéro de dépôt: 98917198.8
(22) Date de dépôt: 20.03.1998
(51) Int. Cl.: G02B 7/00, G02B 7/182

(54) **DISPOSITIF DE POSITIONNEMENT MICROMETRIQUE D'UN SUPPORT D'ELEMENT OPTIQUE SPATIAL SELON SIX DEGRES DE LIBERTE**
MIKROMETRISCHE POSITIONIERUNGSVORRICHTUNG EINER HALTERUNG EINES OPTISCHEN ELEMENTS MIT SECHS FREIHEITSGRADEN
DEVICE FOR MICROMETRIC POSITIONING OF A SPACE OPTICAL SUPPORT ELEMENT ALONG SIX DEGREES OF FREEDOM

(30) Priorité: 28.03.1997 FR 9704034
(43) Date de publication de la demande: 05.01.2000
(73) Titulaire: CENTRE NATIONAL D'ETUDES SPATIALES, F-75039 Paris Cedex 01 (FR)
(72) Inventeur: PERRET, Lionel, F-31400 Toulouse (FR)
(74) Mandataire: Cabinet BARRE LAFORGUE & associés
(86) Numéro de dépôt international: FR9800568
(87) Numéro de publication internationale: WO9844373

(56) Documents cités:
- EP-A- 0 701 157
- FR-A- 2 534 663
- US-A- 3 989 358
- US-A- 4 763 991
- US-A- 5 181 430
- WEST S C ET AL: "OPTICAL METROLOGY FOR TWO LARGE HIGHLY ASPHERIC TELESCOPE MIRRORS" APPLIED OPTICS, vol. 31, no. 34, 1 décembre 1992, pages 7191-7197, XP000324440
- PATENT ABSTRACTS OF JAPAN vol. 008, no. 129 (P-280), 15 juin 1984 & JP 59 033412 A (MATSUSHITA DENKI SANGYO KK), 23 février 1984,

## Description

L'invention concerne un dispositif de positionnement micrométriqué d'un support d'élément optique intégré dans un système spatial, c'est-à-dire un système destiné à être lancé dans l'espace, par exemple un satellite artificiel, une station orbitale, une sonde planétaire...

Les systèmes spatiaux incorporent souvent des systèmes optiques, par exemple pour la réception d'images (observations planétaires ou astronomique), ou même parfois pour l'émission de rayons ou de signaux lumineux... Or, l'efficacité et la précision de ces systèmes optiques sont étroitement liées au positionnement correct des éléments optiques qui les composent par rapport à un bâti solidaire du système spatial.

Certains systèmes optiques embarqués comportent des éléments optiques, dits actifs, pouvant être réglés depuis le sol dans l'espace. Ces systèmes sont sophistiqués, lourds et encombrants, donc extrêmement coûteux, et sont réservés à des applications particulières (par exemple observations astronomiques) pour lesquelles la mobilité et les réglages en fonctionnement sont impératifs.

Par contre, de nombreux systèmes optiques intégrés dans des systèmes spatiaux comportent des éléments optiques, dits passifs, c'est-à-dire qui sont réglés et fixés par rapport au bâti au sol, et dont la position ne peut pas être réglée en vol. Le problème qui se pose avec de tels systèmes optiques est alors celui de la précision du réglage initial au sol et de la conservation de ce réglage lors des phases de décollage (pendant lesquelles le système doit pouvoir supporter de fortes accélérations typiquement de 30 g ou plus), puis dans l'espace en l'absence de gravité. Or, si ces réglages peuvent être facilement effectués selon un, deux ou trois degrés de liberté (par exemple pour le centrage d'un miroir sphérique), ou avec des précisions faibles (supérieures à 10 µm), le problème se pose de positionner un tel élément optique au sol avec une précision de l'ordre du micron et selon six degrés de liberté. Ce problème se pose en particulier pour le positionnement des miroirs asphériques d'un télescope d'observation planétaire, dont les défauts de positionnement ne peuvent pas être compensés par un décentrement comme pour les télescopes à miroirs sphériques, et qui doivent permettre d'obtenir des résolutions très fines. Un exemple de monture optique à six degrés de liberté pour un système spatial est décrit dans le document US A 4 763 991.

L'invention vise donc à pallier ces inconvénients en proposant un dispositif de positionnement micrométrique selon six degrés de liberté d'un élément optique par rapport à un bâti de système spatial permettant le réglage au sol avec une grande précision, le blocage en position et le maintien en position lors du décollage et dans l'espace, la précision étant conservée.

L'invention vise aussi à obtenir ce positionnement de façon simple, peu coûteuse, et avec un faible poids et un faible encombrement des pièces intégrées dans le système spatial.

L'invention vise plus particulièrement à proposer un dispositif de positionnement micrométrique pour les miroirs d'un télescope à miroirs asphériques intégré dans un satellite d'observation de la Terre.

Pour ce faire, l'invention concerne un dispositif de positionnement micrométrique, par rapport à un bâti, d'un support d'élément optique destiné à être intégré dans un système spatial, caractérisé en ce qu'il comprend trois montures solidaires du bâti et, pour chaque monture :
. des premiers moyens de réglage en translation selon une première direction, d'une première portion du support par rapport à la monture,
. des deuxièmes moyens de réglage en translation selon une deuxième direction, au moins sensiblement orthogonale à la première direction, d'une deuxième portion du support par rapport à la monture,
. des troisièmes moyens de réglage micrométrique en translation selon une troisième direction, au moins sensiblement orthogonale à la première et à la deuxième direction, d'une troisième portion du support par rapport à la monture, ces troisièmes moyens de réglage micrométrique comprenant des moyens de mesure micrométrique de la distance séparant la troisième portion du support et une portion en regard de la monture,
les différents premiers, deuxièmes et troisième moyens de réglage des différentes montures étant adaptés pour pouvoir supporter et maintenir le support et l'élément optique en place par rapport au bâti, et pour permettre le réglage de la position du support par rapport au bâti selon six degrés de liberté,
. des moyens de blocage en position réglée du support par rapport au bâti comportant :
   - au moins une vis de blocage associée au support et à la monture par l'intermédiaire de moyens de liaison adaptés pour être compatibles avec différentes positions et orientations relatives pouvant être prises par le support par rapport aux montures, compte tenu des plages admises pour les amplitudes de réglage pour les différents moyens de réglage des différentes montures, la vis de blocage et les moyens de liaison étant adaptés pour bloquer, après serrage, la monture et le support l'un par rapport à l'autre en position,
   - au moins une cale dont l'épaisseur déterminée en fonction de la distance mesurée entre la troisième portion du support et la portion en regard de la monture, cette cale étant placée de façon à combler, avec lesdits moyens de liaison, entièrement la distance séparant la monture du support autour de la vis de blocage,
   de sorte que la position du support par rapport au bâti peut être réglée au sol avec une grande précision selon six degrés de liberté, puis bloquée avec des vis de blocage permettant de maintenir cette position réglée lors du lancement du système spatial et dans l'espace.

Les possibilités de réglage selon trois directions orthogonales au niveau de trois montures distinctes permettent un réglage avec six degrés de liberté pour le support et l'élément optique.

Par ailleurs, le blocage à l'aide de vis de blocage, et avec des cales dont l'épaisseur est déterminée par une mesure d'épaisseur micrométrique, permet à l'élément optique de supporter les phases de décollage et de vol sans déréglage.

Dans toute la présente demande, l'expression "au moins sensiblement selon une direction" englobe cette direction et les directions faisant, avec cette direction, un angle inférieur ou égal aux variations angulaires autorisées pour le support par rapport à cette direction dans les plages admises pour les amplitudes de réglage pour les différents moyens de réglage. Il est à noter à cet égard que le dispositif permettant un positionnement micrométrique, les amplitudes des réglages sont faibles, de sorte que les trois directions de l'espace peuvent être définies, de façon équivalente pour la. cinématique générale du dispositif, soit en référence au support, soit en référence au bâti. Le support est, en outre, adapté pour définir des plans de référence et d'appui des moyens de réglage qui sont parallèles en position nominale (correspondant à la position du support par rapport au bâti telle que définie théoriquement si toutes les pièces et les assemblages étaient parfaits) aux plans de référence et d'appui des moyens de réglage du bâti.

Dans cette mesure, lesdites première, deuxième et troisième directions peuvent être définies et fixes par rapport au bâti ou par rapport au support. De préférence, ces trois directions sont définies et fixes par rapport au bâti.

Par ailleurs, les première, deuxième et troisième directions désignent des directions géométriques communes aux trois montures.

Les première, deuxième et troisième directions sont trois directions au moins sensiblement orthogonales deux à deux, c'est-à-dire qu'elles sont normalement orthogonales deux à deux en position nominale de l'élément optique par rapport au bâti, mais l'une ou plusieurs d'entre-elles peuvent ne pas satisfaire, dans certaines positions, cette condition d'orthogonalité stricte dans les variantes où au moins une direction est définie et fixe par rapport au support alors qu'au moins une autre direction est définie et fixe par rapport au bâti.

Ainsi, la condition principale à laquelle ces trois directions et les différents moyens de réglage doivent satisfaire est de permettre des déplacements relatifs, dans au moins une certaine plage d'amplitudes, permettant le positionnement micrométrique de l'élément optique en position optimale de fonctionnement, selon six degrés de liberté.

Avantageusement et selon l'invention, les troisièmes moyens de réglage micrométrique sont adaptés pour permettre le réglage selon au moins trois précisions distinctes, à savoir une précision grossière, une précision moyenne et une précision fine. Avantageusement et selon l'invention, la précision fine est inférieure ou égale à 1 µm et lesdites précisions grossière et moyenne sont respectivement de l'ordre de 100 µm et 10 µm.

Avantageusement et selon l'invention, les troisièmes moyens de réglage micrométrique comprennent un dispositif de réglage grossier adapté pour permettre le réglage selon la précision grossière, et un dispositif de réglage fin distinct adapté pour permettre le réglage selon les précisions moyenne et fine.

Avantageusement et selon l'invention, le dispositif de réglage grossier est exempt de moyens de mesure de la distance entre la troisième portion du support et la portion en regard de la monture. Ces moyens de mesure peuvent être formés ou incorporés au dispositif de réglage fin ou, en variante, être distincts des dispositifs de réglage grossier et fin, et prévus spécifiquement.

Avantageusement et selon l'invention, le dispositif de réglage grossier comprend :
- deux organes de rappel élastique adaptés pour exercer des forces de rappel antagonistes sur une première pièce qui est solidaire, soit de la monture, soit du support,
- un système de réglage vis/écrou de la distance entre une deuxième pièce qui est solidaire respectivement soit du support (si la première pièce est solidaire de la monture), soit de la monture (si la première pièce est solidaire du support), et une pièce complémentaire, l'un des organes de rappel élastique prenant appui sur ladite pièce complémentaire tandis que l'autre organe de rappel élastique prend appui sur cette deuxième pièce. On entend par "solidaire" le fait que la pièce est portée ou formée par la monture ou le support.

Avantageusement et selon l'invention, les organes de rappel travaillent en compression.

Avantageusement et selon l'invention, les deux organes de rappel élastique sont des cylindres de matériau synthétique élastique en compression, et le système vis/écrou est adapté pour que les deux cylindres soient à l'état comprimé en toute position de réglage.

Avantageusement et selon l'invention, la raideur de chacun des organes de rappel élastique est adaptée pour permettre le maintien en position du support par rapport au bâti sous l'effet de la gravité mais pour autoriser des réglages par action sur les premiers et deuxièmes moyens de réglage et sur le dispositif de réglage fin des troisièmes moyens de réglage micrométrique.

Avantageusement et selon l'invention, le système vis/écrou comprend une tige traversant un alésage ménagé à travers ladite première pièce, et cet alésage est d'un diamètre interne supérieur au diamètre externe de la tige de façon à permettre les déplacements relatifs et les réglages selon lesdites première et deuxième directions.

Avantageusement et selon l'invention, des rondelles en matériau à faible coefficient de frottement statique sont interposées de chaque côté de l'alésage, entre chaque extrémité des organes de rappel élastique et une face d'appui en regard de la première pièce, de façon à faciliter les déplacements relatifs selon les première et deuxième directions sous l'effet des premiers et deuxièmes moyens de réglage.

Avantageusement et selon l'invention, le dispositif de réglage fin est adapté pour repousser lesdites première et deuxième pièces à l'encontre des organes de rappel élastiques du dispositif de réglage grossier.

Avantageusement et selon l'invention, le dispositif de réglage fin comprend des moyens de mesure micrométrique de la distance séparant la troisième portion du support et la portion en regard de la monture selon deux sensibilités distinctes, à savoir une sensibilité moyenne et une sensibilité fine. Avantageusement et selon l'invention, les sensibilités moyenne et fine correspondent auxdites précisions moyenne et fine, et sont notamment respectivement de l'ordre de 10 µm, et inférieure ou égale à 1 µm.

Avantageusement et selon l'invention, le dispositif de réglage fin comprend un corps porté par la monture et une tige mobile selon la troisième direction et dont l'extrémité libre vient au contact en appui sur une portée de la troisième portion du support. Avantageusement et selon l'invention, le dispositif de réglage fin est constitué d'une butée micrométrique différentielle. Avantageusement et selon l'invention, cette butée micrométrique différentielle comprend une tige mobile dont l'extrémité libre vient en appui contre une portée, et cette portée est, au moins en position nominale, perpendiculaire à la direction axiale de déplacement de la tige mobile de cette butée.

Avantageusement et selon l'invention, chaque vis de blocage s'étend au moins sensiblement selon ladite troisième direction.

Par ailleurs, avantageusement et selon l'invention, les moyens de liaison comprennent, pour chaque vis de blocage, deux paires de rondelles à portées sphériques en contact, ces paires de rondelles venant en appui respectivement contre des portées orientées en sens opposés de façon à permettre le serrage de la vis de blocage avec différentes orientations relatives du support et de la monture. En variante et selon l'invention, les moyens de liaison comprennent, pour chaque vis de blocage, une liaison rotule.

Avantageusement et selon l'invention, le dispositif est caractérisé en ce que, pour chaque vis de blocage, le support comprend un taraudage de réception pour une extrémité de la vis de blocage, et la monture comprend une portée d'appui d'une tête de la vis de blocage, et un alésage traversé par la vis de blocage, et en ce que le diamètre interne de l'alésage est supérieur au diamètre externe de la vis de blocage d'une valeur suffisante pour permettre le serrage de la vis de blocage dans le taraudage en toute position du support par rapport au bâti réglée selon les première et deuxième directions, dans la mesure des courses de réglage prévues.

Avantageusement et selon l'invention, les moyens de liaison comportent une paire de rondelles à portées sphériques en contact interposée entre la tête de la vis de blocage et la portée d'appui de la monture, et une paire de rondelles à portées sphériques en contact placée autour de la vis de blocage entre la monture et le support. Plus particulièrement, avantageusement et selon l'invention, une paire de rondelles à portées sphériques en contact vient au contact d'une portée de la monture orientée vers le support. Avantageusement et selon l'invention, la cale est une rondelle interposée entre cette paire de rondelles à portées sphériques en contact qui vient au contact d'une portée de la monture, et une portée de la troisième portion du support.

Par ailleurs, avantageusement et selon l'invention, les premiers moyens de réglages et/ou les deuxièmes moyens de réglage comportent une butée micrométrique portée par la monture ou par le support, cette butée micrométrique ayant une tige dont l'extrémité libre vient au contact d'une portée en regard respectivement du support ou de la monture. Avantageusement, chaque portée est, au moins en position nominale, perpendiculaire à la direction axiale de déplacement de la tige de la butée.

De préférence et selon l'invention, les butées micrométriques des premiers, deuxièmes et troisièmes moyens de réglage sont portées par les montures et leur tige mobile vient en appui contre des portées en regard du support.

Avantageusement et selon l'invention, les trois montures s'étendent globalement selon un même plan au moins sensiblement perpendiculaire à ladite troisième direction, les moyens de réglage selon la première et la deuxième direction étant des moyens de centrage de l'élément optique par rapport aux montures. Les trois montures sont disposées préférentiellement selon une répartition angulaire relative la plus voisine possible (compte tenu des autres contraintes du dispositif et du système optique, notamment de la forme de l'élément optique) d'une répartition à 120 degrés les unes des autres autour d'un axe au moins sensiblement parallèle à la troisième direction.

Avantageusement et selon l'invention, les différents moyens de réglage présentent des pièces adaptées pour être amovibles et dissociées du bâti et/ou du support après le blocage en position réglée. En particulier, avantageusement et selon l'invention, les organes de rappel élastique et le système vis/écrou du dispositif de réglage grossier.des troisièmes moyens de réglage micrométrique, et les différentes butées micrométriques sont montées de façon à être amovibles après le blocage en position réglée.

Avantageusement et selon l'invention, les moyens de blocage sont dimensionnés de façon à pouvoir supporter une accélération maximum comprise entre 15 g et 60 g dans toute direction sans modification du réglage.

L'invention s'étend aussi à un dispositif
caractérisé en ce qu'il comprend en combinaison tout ou partie des caractéristiques mentionnées ci-dessus ou ci-après.

L'invention concerne aussi plus particulièrement l'application d'un dispositif selon l'invention pour la position micrométrique d'un miroir asphérique d'un télescope d'observation terrestre depuis l'espace. L'invention permet néanmoins aussi le positionnement micrométrique de tout autre élément optique de façon semblable (détecteur, source lumineuse, lentille, . . .) pour d'autres systèmes optiques (interféromètre...) ou d'autres systèmes spatiaux (sondes planétaires, satellites d'observation astronomique, stations orbitales...).

D'autres caractéristiques, buts et avantages de l'invention apparaîtront à la lecture de la description suivante qui se réfère aux figures annexées dans lesquelles :
- la figure 1 est une vue en perspective illustrant un mode de réalisation d'un dispositif selon l'invention pour le positionnement micrométrique d'un miroir asphérique représenté en configuration de réglage,
- la figure 2 est une vue similaire à la figure 1, le dispositif étant représenté en configuration de vol,
- la figure 3 est une vue en perspective et en coupe selon le plan des vis de blocage de l'une des montures, du dispositif de la figure 1 en configuration de réglage,
- la figure 4 est une vue similaire à la figure 3 et avec une vue de détail partiel en coupe d'une vis de blocage, le dispositif étant représenté en configuration de vol,
- la figure 5 est une vue en perspective et en coupe par un plan selon la deuxième direction passant par les troisièmes moyens de réglage de l'une des montures, du dispositif de la figure 1 en configuration de réglage,
- la figure 6 est une vue similaire à la figure 5, le dispositif étant représenté en configuration de vol.

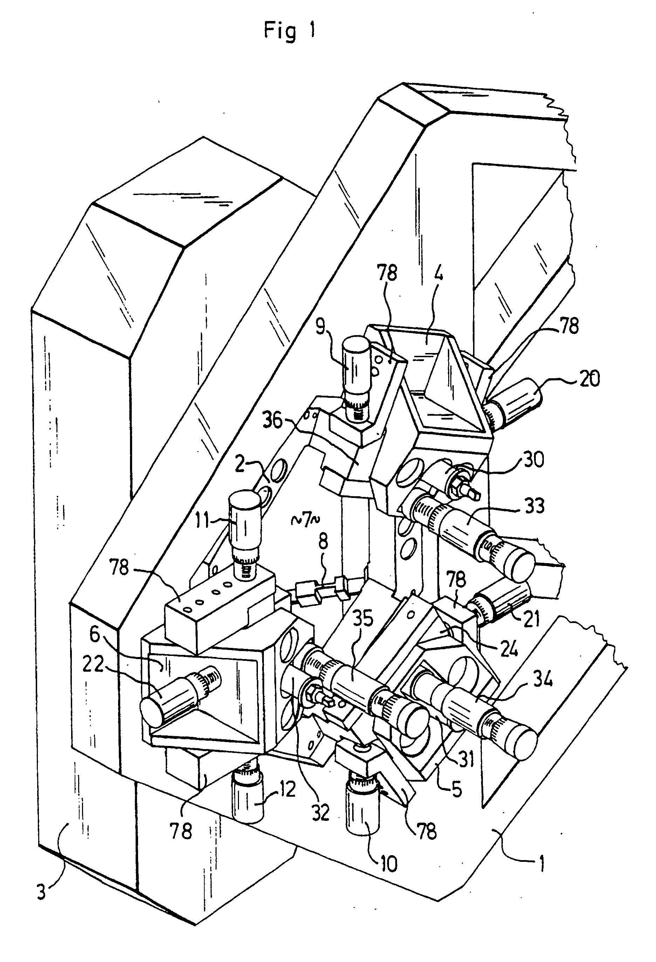

Sur la figure 1, on a représenté un dispositif de positionnement micrométrique par rapport à un bâti 1 d'un support 2 d'un miroir asphérique 3 faisant partie d'un télescope à miroirs asphériques intégré dans un satellite d'observation de la Terre. Le bâti 1 est solidaire de la structure du satellite. Chacun des miroirs du télescope étant monté sur un support relié au bâti 1 par un dispositif de positionnement micrométrique selon l'invention, les miroirs sont positionnés les uns par rapport aux autres avec une très grande précision.

Sur la figure 1, le dispositif de positionnement micrométrique est représenté en configuration de réglage au sol, l'axe optique principal du miroir 3 étant au moins sensiblement horizontal.

Le dispositif selon l'invention comprend trois montures 4, 5, 6 qui sont solidaires du bâti 1 et disposées autour d'une ouverture 7 ménagée à travers le bâti 1 pour recevoir le support 2. Les montures 4, 5, 6 sont disposées selon une répartition angulaire relative la plus proche possible d'une répartition à 120° les unes des autres autour de l'ouverture 7. Les montures 4, 5, 6 sont en forme générale de potence, de façon à présenter des portions qui s'étendent radialement en saillie vers le centre de l'ouverture 7, pour venir en regard du support 2 inséré dans l'ouverture 7.

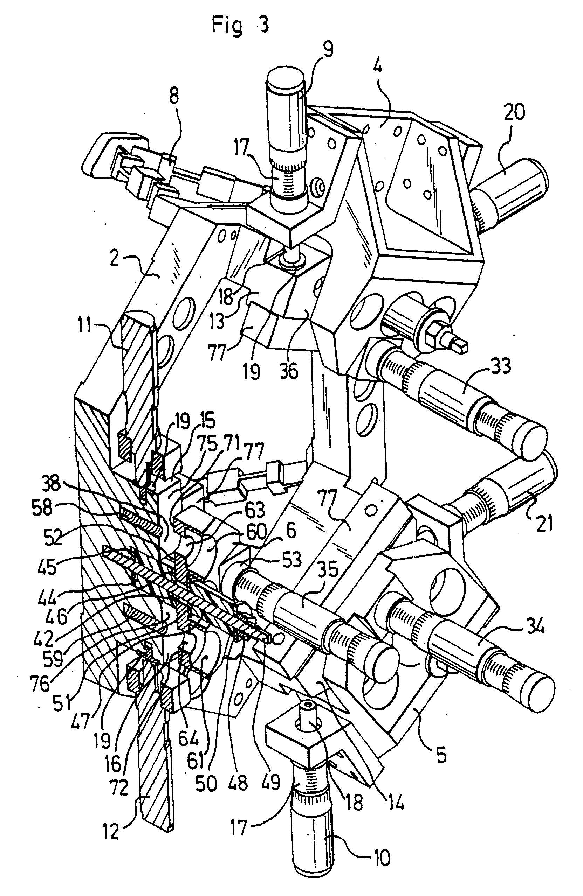

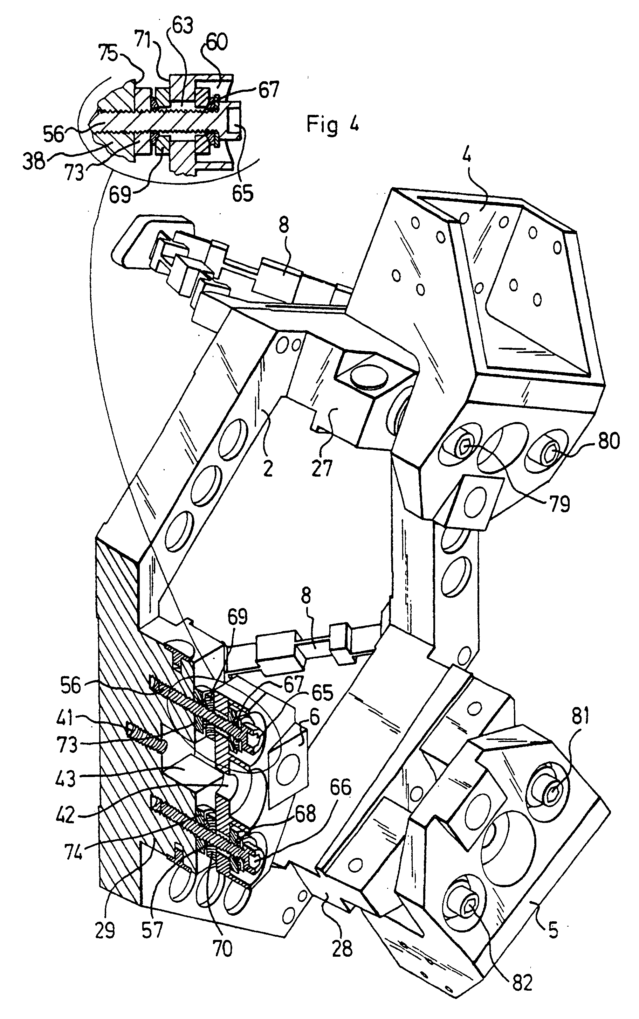

Le support 2 a une forme générale de cadre rigide (figures 3 et 4), et le miroir 3 est relié, de façon connue en soi, à ce support 2 par l'intermédiaire de pattes de fixation 8 appropriées réalisant un montage isostatique.

Chaque monture 4, 5, 6 comprend au moins une butée micrométrique 9, 10, 11, 12 de réglage en translation selon une première direction, qui est la direction verticale dans le mode de réalisation représenté, d'une première portion 13, 14, 15, 16 en regard du support 2.

Chaque butée micrométrique 9, 10, 11, 12 comprend un corps 17 de butée porté par la monture 4, 5, 6 et une tige d'actionnement 18 venant en appui contre une portée 19 qui est au moins sensiblement perpendiculaire à la direction axiale de la tige 18 (c'est-à-dire à la direction verticale) et qui est solidaire de ladite première portion 13, 14, 15, 16 du support 2. De préférence, les portées 19 sont formées de pièces rapportées en alliage spécial de grande dureté (par exemple, en acier marval).

Dans le mode de réalisation représenté, de préférence et selon l'invention, le dispositif comprend une monture supérieure droite 4, une monture inférieure droite 5, et une monture 6 gauche placée à une hauteur médiane.

La monture 4 supérieure droite comprend une butée micrométrique 9 verticale adaptée pour repousser la première portion 13 en regard du support 2 vers le bas. La monture inférieure droite 5 comprend une butée micrômétrique 10 verticale adaptée pour repousser la première portion 14 en regard du support 2 vers le haut. La monture gauche médiane 6 comprend une butée micrométrique verticale 11 supérieure repoussant une portion 15 du support 2 en regard vers le bas, et une butée micrométrique verticale inférieure 12 repoussant une portion 16 en regard du support 2 vers le haut. Ainsi, les différentes butées 9 à 12 sont adaptées pour agir suivant la direction verticale dans des sens opposés, et autorise donc des réglages isostatiques.

Le support 2 est porté dans la direction verticale par les deux butées micrométriques 10, 12 dont les tiges d'actionnement sont orientées vers le haut verticalement.

Chaque monture 4, 5, 6 comprend également au moins une butée micrométrique 20, 21, 22 de réglage en translation selon une deuxième direction qui est la direction horizontale transversale parallèle au plan de l'ouverture 7, d'une deuxième portion 24, 25 en regard du support 2. Cette deuxième direction est orthogonale à la première direction.

Ces butées micrométriques 20, 21, 22 sont constituées de la même façon que les butées micrométriques 9, 10, 11, 12 verticales, et comprennent donc un corps 17 porté par la monture 4, 5, 6 et une tige mobile 18 dont l'extrémité libre vient en appui contre une portée 26 en regard solidaire du support 2. La portée 26 s'étend au moins sensiblement perpendiculairement à l'axe de la tige mobile de la butée 20, 21, 22, et est avantageusement constituée d'une pièce rapportée sur le support 2 en alliage de grande dureté.

La monture supérieure droite 4 comprend une butée micrométrique 20 horizontale repoussant la portion en regard (non visible sur les figures) du support 2 vers la gauche horizontalement. La monture inférieure droite 5 comprend une butée micrométrique 21 repoussant la deuxième portion 24 en regard du support 2 vers la gauche horizontalement. La monture médiane gauche 6 comprend une butée micrométrique 22 horizontale repoussant une deuxième portion 25 en regard du support. 2 vers la droite horizontalement. Les différentes butées 20 à 22 sont aussi adaptées pour agir suivant la direction horizontale transversale dans des sens opposés, et autorisent ainsi des réglages isostatiques. De la sorte, les différentes butées micrométriques verticales 9, 10, 11, 12 et horizontales 20, 21, 22 forment des premiers moyens 9 à 12 de réglage en translation selon la direction verticale et, respectivement, des deuxièmes moyens 20 à 22 de réglage en translation horizontale permettant de centrer le support 2 par rapport aux trois montures 4,5, 6 et par rapport à l'ouverture 7 du bâti 1.

Le support 2 comprend trois extensions 27, 28, 29 s'étendant perpendiculairement à son plan, de façon à venir en regard de chacune des montures 4, 5, 6 pour définir les différentes portions du support 2 qui coopèrent avec les différentes butées micrométriques 9 à 12 et 20 à 22 verticales et horizontales de centrage du support 2 dans l'ouverture 7. Les trois extensions 27, 28, 29 sont donc disposées avec la même répartition angulaire que les montures 4, 5, 6, c'est-à-dire au moins sensiblement à 120° les unes des autres sur le cadre formant le support 2.

Ainsi, les butées micrométriques 9, 10, 11, 12 verticales forment des premiers moyens 9 à 12 de réglage en translation selon la première direction verticale d'une première portion 13 à 16 du support 2 par rapport à la monture 4, 5, 6. Les butées micrométriques 20, 21, 22 horizontales transversales s'étendant parallèlement au plan de l'ouverture 7 forment des deuxièmes moyens 20 à 22 de réglage en translation selon une deuxième direction, orthogonale à la première direction, d'une deuxième portion 24, 25 du support 2 par rapport à la monture 4, 5, 6. Sur la configuration représentée, cette deuxième direction correspond donc à la direction horizontale transversale, c'est-à-dire à la direction horizontale parallèle au plan de l'ouverture 7.

Le dispositif de positionnement micrométrique selon l'invention comporte en outre des troisièmes moyens 30 à 35 de réglage micrométrique en translation selon une troisième direction qui est orthogonale à la première et à la deuxième direction, d'une troisième portion 36, 37, 38 du support 2 par rapport à la monture 4, 5, 6. Cette troisième direction est de préférence la direction horizontale axiale de l'ouverture 7, c'est-à-dire la direction horizontale orthogonale à la première direction verticale et à la deuxième direction horizontale transversale. Cette troisième direction correspond également en général à l'axe de visée optique du télescope, et/ou à l'axe principal du miroir 3, et le support 2 est peu incliné ou n'est pas incliné par rapport à cette troisième direction, selon la configuration du système optique (centrée ou hors axe).

Plus particulièrement, il est à noter que lorsque le support 2, en forme de cadre plan, est dans sa position de réglage parfait, les extensions 27, 28, 29 définissent un plan vertical qui est peu incliné ou n'est pas incliné par rapport au plan vertical de l'ouverture 7, et donc par rapport au plan vertical défini par les montures 4, 5, 6. Cette inclinaison est notamment suffisamment faible pour que les angles relatifs entre les première, deuxième et troisième directions prises en référence au bâti 1, et respectivement, les directions correspondantes verticale, horizontale transversale, et horizontale axiale prises en référence au support 2, présentent des valeurs de l'ordre de quelques dizaines de milliradians correspondant aux courses maximales des réglages permis du support 2 selon la troisième direction.

Les trois montures 4, 5, 6 s'étendent globalement selon un même plan perpendiculaire à la troisième direction, et les premiers moyens 9 à 12 de réglage et les deuxièmes moyens 20 à 22 de réglage selon la première et, respectivement, selon la deuxième direction, sont des moyens de centrage du support 2 et du miroir 3 par rapport aux montures 4, 5, 6, et par rapport à l'ouverture 7. Les trois montures 4, 5, 6 sont disposées de préférence au moins sensiblement à 120° les unes des autres autour d'un axe au moins sensiblement parallèle à la troisième direction. De préférence, lors du réglage, la troisième direction est au moins sensiblement horizontale et la première direction est au moins sensiblement verticale. Néanmoins, l'orientation du dispositif lors du réglage est en fait sans importance, et d'autres orientations sont possibles. En particulier, en variante, la troisième direction correspondant à l'axe optique du miroir peut être colinéaire à la direction verticale lors de l'intégration au sol.

L'orientation du dispositif selon l'invention au lancement par rapport à la direction de poussée de la fusée est aussi sans importance, le dispositif étant dimensionné en configuration serrée/bloquée pour supporter l'accélération de décollage (30 g ou plus) dans toute direction.

Les troisièmes moyens 30 à 35 de réglage micrométrique comprennent, pour chaque monture 4, 5, 6 , un dispositif de réglage grossier 30, 31, 32 adapté pour permettre le réglage selon une précision grossière et un dispositif de réglage fin 33, 34, 35, adapté pour permettre un réglage selon des précisions moyenne et fine.

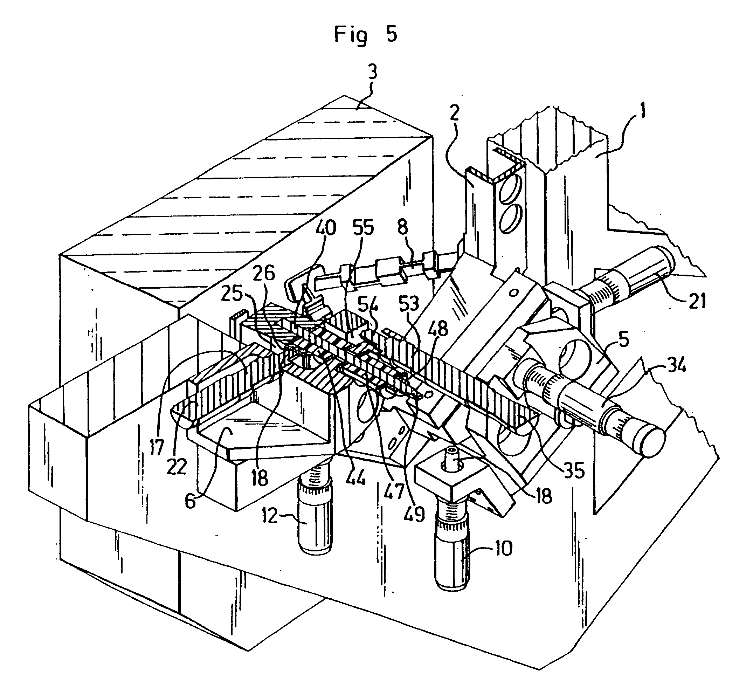

Les figures 3 et 5 représentent en coupe les troisièmes moyens 32, 35 de réglage de la monture médiane gauche 6. Par la suite, seuls ces troisièmes moyens 32, 35 sont décrits en détail, étant entendu que les mêmes organes et dispositifs sont prévus pour les deux autres montures supérieure droite 4 et inférieure droite 5.

Le dispositif de réglage grossier 32 comprend une tige filetée 40 dont une extrémité est vissée dans un taraudage borgne 41 du support 2. La tige 40 et le taraudage 41 s'étendent parallèlement à la direction horizontale axiale du support 2, c'est-à-dire sensiblement selon la troisième direction, l'inclinaison entre ces deux directions étant nulle en position nominale et faible après réglage. La tige 40 s'étend en direction de la monture 6 qu'elle traverse par un alésage 42 dont le diamètre interne est supérieur au diamètre externe de la tige 40. La troisième portion 38 du support 2 en regard de la monture 6 comprend un logement 43 de réception d'un cylindre 44 de matériau synthétique élastique traversé axialement par la tige 40. Ce cylindre 44 est donc interposé entre le support 2 et la monture 6 et s'étend autour de la tige 40. Au moins une rondelle 45 en matériau à faible coefficient de frottement statique, par exemple en TEFLON ou revêtue de NUFLON (marques enregistrées) est interposée entre le fond du logement 43 du support 2 et une extrémité correspondante du cylindre 44. De même, au moins une rondelle 46 en matériau à faible coefficient de frottement statique est interposée entre l'autre extrémité du cylindre 44 et une portée 52 de la monture 6. Le cylindre 44 et les rondelles 45, 46 ont un diamètre interne qui correspond au diamètre externe de la tige 40. De préférence, deux rondelles 45, 46 sont prévues à chaque extrémité du cylindre 44.

La tige 40 est prolongée au-delà de l'alésage 42 de façon à pouvoir recevoir, de l'autre côté de cet alésage 42 et de la monture 6, un cylindre 47 de matériau synthétique élastique similaire au cylindre 44. La tige 40 traverse axialement tout le cylindre 47, et l'extrémité de cette tige 40 reçoit un écrou 48. Au moins une rondelle 50 en matériau à faible coefficient de frottement statique est interposée entre l'écrou 48 et l'extrémité correspondante du cylindre 47. De même, au moins une rondelle 51 en matériau à faible coefficient de frottement statique est interposée entre l'autre extrémité du cylindre 47 et une portée correspondante, définie autour de l'alésage 42, de la monture 6. De préférence, deux rondelles 50, 51 sont prévues à chaque extrémité du cylindre 47.

De cette manière, les différentes rondelles 45, 46, 50, 51 facilitent et permettent les déplacements relatifs, selon les première et deuxième directions, du support 2 par rapport à la monture 6 sous l'effet des premiers et deuxièmes moyens de réglage.

L'extrémité libre de la tige 40 est adaptée pour permettre sa coopération avec un outil pour le vissage et le dévissage de cette tige 40 par rapport au taraudage 41 du support 2. Par exemple, cette extrémité libre 49 est carrée.

L'écrou 48 est vissé sur la tige 40 pour comprimer axialement les deux cylindres 44, 47. Ces deux cylindres 44, 47 ont chacun une longueur telle qu'ils sont tous deux à l'état comprimé en toute position de réglage du support 2 par rapport au bâti 1.

Ainsi, les deux cylindres 44, 47 élastiques constituent des organes de rappel élastiques qui exercent des forces de rappel antagonistes sur la monture 6, c'est-à-dire respectivement de chaque côté de l'alésage 42. La tige 40 et l'écrou 48 constituent un système de réglage vis/écrou de la distance entre la troisième portion 38 du support 2 et l'écrou 48, le cylindre 47 prenant appui sur l'écrou 48 par l'intermédiaire de la (ou des) rondelle(s) 50, tandis que le cylindre 44 prend appui sur cette troisième portion du support 2 par l'intermédiaire de la (ou des) rondelle(s) 51.

La raideur de chacun des cylindres 44, 47 dans la direction axiale (troisième direction) est adaptée pour permettre le maintien en position du support 2 par rapport bâti 1 sous l'effet de la gravité, mais pour autoriser des réglages par action sur les premiers 9 à 12 et deuxièmes 20 à 22 moyens de réglage et sur le dispositif de réglage fin 33 à 35 des troisièmes moyens 30 à 35 de réglage micrométriques décrits ci-après.

La différence entre le diamètre interne de l'alésage 42 et le diamètre externe de la tige 40 est adaptée pour permettre les déplacements relatifs et les réglages selon les première et deuxième directions.

Comme on le voit, ce dispositif de réglage grossier 32 est exempt de moyen de mesure de la distance séparant la troisième portion 38 du support 2 de la portion en regard de la monture 6 (qui est formée de la portée 52 autour de l'alésage 42 sur laquelle le cylindre 44 vient en appui par l'intermédiaire de la rondelle 46). La mesure lors du réglage grossier est en effet effectuée grâce à des moyens de mesure micrométrique formés par le dispositif de réglage fin 35.

En serrant l'écrou 48 sur la tige filetée 40, on comprime les deux cylindres 44, 47 et on rapproche la monture 6 du support 2 selon la troisième direction axiale. Si p est le pas de la tige filetée 40, K1 le coefficient de raideur élastique axiale du cylindre 47 interposé entre l'écrou 48 et la monture 6, et K2 le coefficient de raideur axiale du cylindre 44 interposé entre le support 2 et la monture 6, la précision grossière de ce dispositif de réglage 32 est égale à pxK2/(K1+K2) par tour de l'écrou 48, soit p/2 si K1 = K2. Cette précision grossière peut ainsi être adaptée à la valeur désirée dans la limite des valeurs possibles pour K1 et K2, par un choix approprié du rapport K1/K2 et du pas p de la tige filetée 40 et de l'écrou 48. Par exemple, si le pas p est égal à 0,5 mm/tour et si K1 = K2, on obtient une précision grossière sur un quart de tour de l'ordre de 62,5 µm. Les cylindres 44, 47 sont avantageusement constitués de matériau élastomère tel qu'un caoutchouc, dont la raideur est par exemple de l'ordre de 50 N/mm. En variante, on peut utiliser des ressorts de compression à la place des cylindres 44, 47.

Il est à noter que d'autres variantes de réalisation de ce dispositif de réglage grossier 30 à 32 sont possibles. Par exemple, la tige 40 et l'écrou 48 peuvent être remplacés par une vis dont la tête remplace l'écrou 48 et dont l'extrémité libre est insérée dans un taraudage du support 2 suffisamment long pour permettre le serrage et le desserrage de cette vis en vue du réglage. Dans une autre variante, la tige 40 peut traverser le support 2 qui est alors doté d'un alésage de plus grand diamètre à la place du taraudage 41, la tige filetée étant alors vissée dans un taraudage de la monture 6 et l'écrou de serrage étant disposé de l'autre côté du support 2, c'est-à-dire du côté du miroir 3. Dans ce cas, les cylindres de rappel élastique sont placés de part et d'autre du support 2 et exercent des forces de rappel antagonistes, non pas sur la monture, mais sur le support 2. Du point de vue cinématique, ce dernier montage est équivalent au précédent dans la mesure où le serrage de l'écrou aura encore pour effet de comprimer les deux cylindres et de rapprocher la monture 6 du support 2.

Le dispositif de réglage fin 35 est adapté pour repousser le support 2 et la monture 6 à l'encontre des cylindres 44, 47 de rappel élastique du dispositif de réglage grossier 32. Ce dispositif de réglage fin 35 est constitué d'une butée micrométrique différentielle, c'est-à-dire une butée micrométrique comprenant deux molettes de réglage selon deux précisions différentes, à savoir une molette de réglage selon une précision moyenne, et une molette de réglage selon une précision fine. La précision fine est inférieure ou égale à 1 µm, de façon à permettre le réglage selon la troisième direction au micron près. La précision moyenne est par exemple de l'ordre de 10 µm. La butée micrométrique différentielle 35 comprend un corps 53 porté par la monture 6, et une tige 54 mobile selon la troisième direction dont l'extrémité libre vient au contact en appui sur une portée 55 en regard de la troisième portion 38 du support 2 (figure 5). En tournant les molettes de réglage de la butée 35, la tige 54 se déploie et repousse cette portée 55, ce qui a pour effet d'éloigner le support 2 de la monture 6, donc de décomprimer le cylindre 44 en comprimant le cylindre 47.

Il est à noter que les trois butées micrométriques différentielles 33 à 35 repoussent le support 2 selon la direction horizontale axiale toutes les trois dans le même sens, le rappel dans l'autre sens étant assuré par les cylindres élastiques 44, 47 du dispositif de réglage grossier 30 à 32. Dès lors, on autorise aussi un réglage isostatique suivant cette troisième direction du support 2 par rapport au bâti 1.

Cette butée micrométrique différentielle 35 constitue également des moyens permettant la mesure micrométrique de la distance séparant la troisième portion 38 du support 2 et la portion en regard de la monture 6, et ce selon deux sensibilités distinctes, à savoir une sensibilité moyenne de l'ordre de 10 µm et une sensibilité fine inférieure ou égale à 1 µm. La butée micrométrique différentielle 35 servant à la fois au réglage micrométrique de la position du support 2 par rapport à la monture 6 selon la troisième direction et à la mesure micrométrique de la distance séparant le support 2 de la monture 6, les sensibilités moyenne et fine correspondent aux précisions moyenne et fine. Il est à noter cependant qu'en variante il serait possible de prévoir des moyens de mesure micrométrique distincts du dispositif de réglage fin.

Pour la mesure de cette distance, il suffit à partir de la position réglée, d'insérer une cale d'épaisseur étalon autour de la tige 54 de la butée 35 et de desserrer cette butée 35 (c'est-à-dire de rétracter la tige 54 en agissant sur les molettes) jusqu'à ce que la portée 55 du support 2 et la portée 51 en regard de la monture 6 viennent au contact de la cale d'épaisseur. Connaissant l'épaisseur de cette cale, on peut déterminer la distance initiale entre la portée 55 du support et la portée 52 de la monture 6. En outre, la butée micrométrique différentielle 35 étant dotée de verniers, il est aisé de revenir à cette position de réglage, et ce à la précision voulue de 1 µm.

Le dispositif de positionnement micrométrique selon l'invention comprend donc les trois dispositifs de réglage grossier 30, 31, 32, qui sont tous similaires au dispositif 32 décrit ci-dessus, et trois butées micrométriques différentielles 33, 34, 35 similaires à la butée 35 décrite ci-dessus. Ainsi, les troisièmes moyens 30 à 35 de réglage micrométrique selon la troisième direction sont des moyens de réglage à double étage, à savoir un étage grossier à système vis/écrou, et un étage fin à butée micrométrique différentielle.

Les différents moyens de réglage 9 à 12, 20 à 22 et 30 à 35 du dispositif selon l'invention, selon les trois directions orthogonale, constituent un ensemble isostatique de liaison entre le support 2 et le bâti 1. De la sorte, les déplacements relatifs du support 2 effectués selon une direction n'influençent pas les réglages de la position du support 2 dans les deux autres directions orthogonales, et les réglages sont grandement facilités.

Il est à noter que les extensions 26, 27, 28 du support 2 définissent des portées planes 19, 26, 55 s'étendant perpendiculairement aux directions de poussée des butées 9 à 12, 20 à 22, 33 à 35 micrométriques en regard. Il en va de même de chacune des portées de chaque monture 4, 5, 6 sur lesquelles les cylindres 44, 47 viennent en appui, qui sont perpendiculaires à l'axe des tiges filetées 40 et des taraudages 41 du dispositif de réglage grossier 30 à 32.

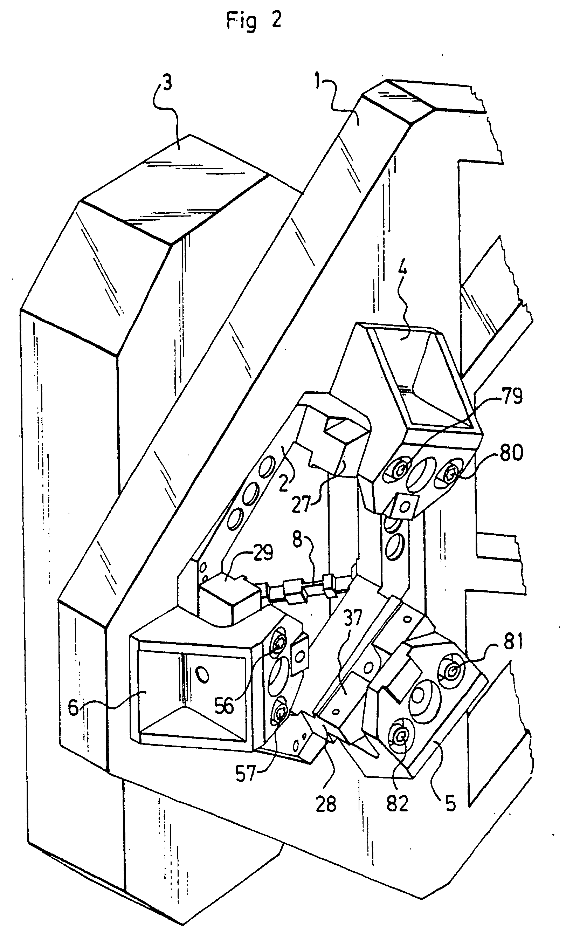

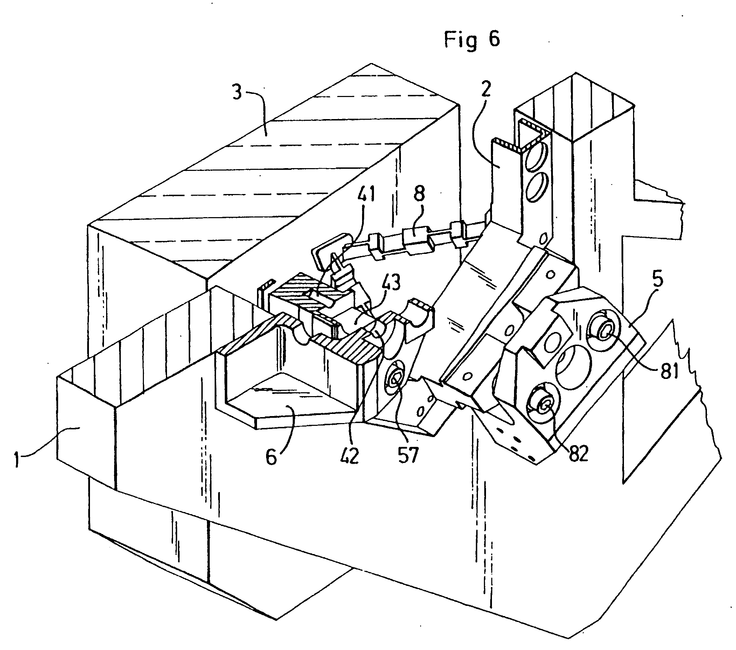

Une fois le réglage en position optimale de fonctionnement effectué, grâce aux moyens de réglage décrits ci-dessus, selon les trois directions de l'espace et pour les trois montures 4, 5, 6, c'est-à-dire selon six degrés de liberté, on procède au blocage du support 2 en position par rapport au bâti 1, grâce aux moyens 56 à 76, 79 à 82 de blocage du dispositif qui sont représentés sur les figures 2, 4 et 6. Les moyens de blocage en position réglée sont aussi décrits ci-après en référence à la monture médiane gauche 6 uniquement, étant entendu qu'ils sont similaires pour les deux autres montures 4, 5.

Les moyens de blocage comportent deux vis 56, 57 parallèles dont l'extrémité libre filetée est engagée dans un taraudage borgne 58, 59 ménagé selon la troisième direction axiale dans la troisième portion 38 du support 2. Pour chacune des vis de blocage 56, 57, la monture 6 comprend un logement de réception 60, 61, et un alésage 63, 64 dont le diamètre interne est supérieur au diamètre externe de la vis 56, 57, de sorte que cette vis 56, 57 peut être engagée dans le taraudage 58, 59 quelle que soit la position réglée du support 2 par rapport à la monture 6. Les logements 60, 61 reçoivent les têtes 65, 66 des vis 56, 57. Pour chaque vis de blocage, une paire de rondelles 67, 68 à portées sphériques en contact est interposée entre la tête 65, 66 de la vis et le fond du logement 60, 61 de la monture 6, de sorte que la vis de blocage 56, 57 prend appui sur ce fond de logement et donc sur la monture 6 quelle que soit l'inclinaison que peut présenter l'axe de la vis de blocage par rapport à ce fond de logement, et par rapport à l'axe de l'alésage 63, 64.

De l'autre côté de l'alésage 63, 64, une autre paire 69, 70 de rondelles à portées sphériques en contact est également placée autour de la vis 56, 57 et en contact avec une portée 71, 72 de la monture 6. En outre, une rondelle 73, 74 est interposée entre cette paire de rondelles 69, 70 à portées sphériques en contact, et une portée 75, 76 en regard de la troisième portion 38 du support 2. Les deux vis de blocage 56, 57 sont donc associées à la monture 6 par des moyens de liaison comprenant deux paires 67, 68 et 69, 70 de rondelles à portées sphériques en contact, qui viennent en appui respectivement contre des portées de la monture 6 orientées en sens opposés. Ainsi, une rondelle d'une première paire 67, 68 vient en appui contre le fond du logement 60, 61 orienté vers la tête de la vis 56, 57, et une rondelle d'une deuxième paire 69, 70 vient en appui contre la portée 71, 72 orientée vers le support 2. Ces portées (fonds des logements 60, 61 et portées 71, 72) sont définies par des faces planes perpendiculaires à la troisième direction axiale autour des extrémités débouchantes de l'alésage 63, 64 de la monture 6. La portée 71, 72 de la monture 6 est une portée d'appui de la tête 65, 66 de la vis de blocage 56, 57 par l'intermédiaire de la paire de rondelles 67, 68.

La rondelle 73, 74 interposée entre la paire de rondelles 69, 70 à portées sphériques en contact, et ladite portée 75, 76 de la troisième portion 38 du support 2, fait office de cale dont l'épaisseur est adaptée lors du réglage (par exemple par rectification) en fonction de la distance mesurée entre la troisième portion 38 du support 2 et la portion en regard de la monture 6 grâce à la butée micrométrique différentielle 35. Ainsi, cette rondelle 73, 74 comble, avec la paire de rondelles 69, 70 à portées sphériques, entièrement la distance séparant la monture 6 et le support 2 autour de la vis de blocage 56, 57.

Lors du serrage de la vis de blocage 56, 57, cette distance est donc conservée. En outre, les surfaces en contact des paires de rondelles à portées sphériques 67, 68 et 69, 70 avec les portées correspondantes de la monture 6, sont telles qu'elles présentent un coefficient de frottement statique le plus élevé possible, de sorte que le serrage des vis de blocage 56, 57 bloque également le support 2 par rapport à la monture 6 en empêchant les déplacements relatifs selon les première et deuxième directions.

Dans le mode de réalisation représenté, pour chaque monture 4, 5, 6, le dispositif comprend au moins avantageusement deux vis de blocage 56, 57 ; 79, 80 ; 81, 82 parallèles entre elles disposées de chaque côté du dispositif de réglage grossier 30 à 32 et le plus près possible de ce dispositif de réglage grossier 30 à 32. Le nombre de vis de blocage prévu est adapté en fonction des efforts mécaniques que ces vis doivent supporter en situation d'utilisation (notamment au décollage). Le dispositif de réglage grossier 30 à 32, le dispositif de réglage fin 33 à 35 et les deux vis de blocage 56, 57 ; 79, 80 ; 81, 82 sont disposés de façon à coopérer avec les extensions 27, 28, 29 axiales selon la troisième direction du support 2 et pour être les plus proches les uns des autres que possible.

Grâce aux rondelles à portées sphériques en contact et à la différence de diamètre entre les alésages 63, 64 et les vis de blocage, ces vis 56, 57 ; 79, 80 ; 81, 82 de blocage peuvent être serrées dans les taraudages 58, 59 du support 2 avec différentes positions et orientations relatives pouvant être prises par le support 2 par rapport aux montures 4, 5, 6, compte tenu des plages admises pour les amplitudes de réglage pour les différents moyens de réglage des différentes montures. Les vis de blocage et leurs moyens 58, 59, 67 à 70 de liaison au support 2 et à la monture 6 sont adaptés pour bloquer, après serrage, la monture 6 et le support 2 en position, les vis de blocage s'étendant au moins sensiblement selon la troisième direction axiale. De préférence, toutes les vis de blocage sont orientées axialement et serrées dans le même sens.

En variante non représentée, pour chaque vis de blocage, les deux paires de rondelles à portées sphériques en contact peuvent être remplacées par une liaison rotule.

Par ailleurs, les différents moyens de réglage présentent des pièces adaptées pour être amovibles et dissociées du bâti 1 et/ou du support 2 après le blocage en position réglée. En particulier, les cylindres élastiques 44, 47, les tiges filetées 40 avec leurs écrous 48 et leurs rondelles 45, 46, 50, 51, c'est-à-dire l'ensemble du dispositif de réglage grossier 32 des troisièmes moyens de réglage micrométrique et les différentes butées micrométriques 9 à 12, 20 à 22, 33 à 35 verticales, horizontales transversales, et horizontales axiales sont amovibles après le blocage en position réglée et peuvent être dissociés de la monture 6 et du support 2.

La portée 55 de la troisième portion 38 du support 2 sur laquelle la tige 54 de la butée micrométrique différentielle 35 appuie est formée par une pièce 77 qui est montée amovible par rapport à l'extension 27, 28, 29 correspondante du support 2, et ce grâce à des vis. Cette pièce 77 amovible est disposée de façon à refermer le logement 43 en forme de gorge ménagé dans la troisième portion 38 du support 2 pour recevoir le cylindre 44 élastique. Ainsi, lorsque cette pièce 77 définissant la portée 55 est enlevée, le logement 43 est ouvert vers le centre du support 2 et le cylindre 44 peut être extrait transversalement. Dès lors, pour démonter le dispositif de réglage grossier 32, il suffit de dévisser la vis 40 en agissant sur son extrémité carrée 49, d'enlever la pièce 77 formant la portée 55, et d'extraire le cylindre 44 par l'ouverture ainsi dégagée du logement 43.

Les butées micrométriques 9 à 12 et 20 à 22 de réglage selon les première et deuxième directions sont avantageusement portées par des supports individuels 78 fixés à chaque monture par des vis. En démontant les supports individuels 78, on démonte simultanément les butées micrométriques correspondantes. En variante, pour certaines des butées micrométriques, par exemple pour la butée micrométrique 22 horizontale transversale de la monture 6 et pour les butées micrométriques différentielles 33, 34, 35 axiales, les corps de ces butées micrométriques sont directement fixés par vissage dans un taraudage de la monture. Lorsque toutes les vis de blocage 56, 57 ; 79, 80 ; 81, 82 sont serrées et que les différentes pièces des moyens de réglage sont démontées, le dispositif de positionnement se présente en configuration de vol tel que représenté sur les figures 2, 4, 6.

Sur la figure 4, les portées de contact 19 pour les butées 9 à 12 micrométriques verticales sont représentées, mais il est entendu que ces portées pourraient être également démontées avant le décollage. Sur les figures 3 et 4, le bâti 1 n'est pas représenté pour plus de clarté, seules les montures 4, 5, 6 étant représentées.

Il est également à noter que les cylindres en matériau élastomère 44, 47, qui ne pourraient pas être intégrés dans un système spatial (compte tenu du dégazage du caoutchouc dans le vide) sont démontés après le blocage du support 2 en position réglée.

Les différentes butées micrométriques et les portées 19, 26 et 55 sur lesquelles elles appuient, sont en un matériau adapté pour permettre le réglage et le soutien du support 2 et du miroir 3 lors du réglage au sol, compte tenu de la masse totale ainsi suspendue. En outre, la portée 55 d'appui de la tige mobile des butées micrométriques différentielles 33, 34, 35 et ces butées elles-mêmes sont choisies de façon à pouvoir écarter le support 2 de la monture à l'encontre du cylindre élastique 47. L'ensemble de ces butées et des portées correspondantes sont en un matériau extrêmement dur, et sont adaptées pour supporter des efforts axiaux importants, notamment de l'ordre de 50 N à 150 N, pour un support 2 et un miroir 3 ayant une masse totale pouvant aller jusqu'à 15 kg. Les différentes butées micrométriques 9 à 12, 20 à 22 et 33 à 35 sont par exemple des butées telles que commercialisées par la Société MICRO-CONTROLE (EVRY, FRANCE).

De même, les différentes montures 4, 5, 6 sont formées en un matériau extrêmement résistant et rigide afin d'éviter toute modification du réglage de la position du miroir 3 lors du serrage des vis de blocage 56, 57, puis lors du décollage.

Le dispositif selon l'invention fonctionne de la façon suivante.

On place tout d'abord le support 2 dans l'ouverture 7 en engageant les tiges filetées 40 préalablement fixées sur le support 2 à travers les alésages 42 des montures 4, 5, 6, et après avoir inséré les rondelles 45, 46 et les cylindres 44. Les montures 4, 5, 6 sont dotées des butées micrométriques 9 à 12, 20 à 22, 33 à 35 de réglage. Par contre, lors du réglage, les vis de blocage ne sont pas installées.

Pour faciliter ce centrage initial, au moins deux goujons de centrage peuvent être prévus respectivement montés dans des taraudages 58, 59 destinés ultérieurement aux vis de blocage. Ces goujons prennent ainsi appui radialement dans les alésages 63, 64 correspondants des montures 4, 5, 6.

On serre ensuite les écrous 48 des différents dispositifs de réglage grossier 30, 31, 32.

On réalise ensuite le centrage du support 2 et du miroir 3 en mettant les sept butées verticales 9 à 12 et horizontales transversales 20 à 22 au contact de leur portée respective.

On règle ensuite la position du support 2 en tilts et en focus, c'est-à-dire en inclinaison et en position axiale par rapport à l'axe de l'ouverture 7, tout d'abord grâce aux écrous 48 des dispositifs 30 à 32 de réglage grossier, puis, au micron près, grâce aux butées micrométriques différentielles 33 à 35, selon la précision moyenne puis selon la position fine. On effectue ces réglages par itérations successives et mesures optiques en contrôlant la qualité de l'image obtenue. Lorsque le réglage en position optimale est obtenu, on mesure la distance axiale séparant les portées 55 du support 2 des portées 52 des montures 4, 5, 6 dans la troisième direction axiale grâce aux différentes butées micrométriques différentielles 33 à 35 comme décrit ci-dessus. On choisit ensuite chacune des rondelles 73, 74 (cales) d'épaisseur déterminée en fonction de cette mesure de distance, puis on pose et on serre au couple de serrage nominal les différentes vis 56, 57 ; 79, 80 ; 81, 82 de blocage. On réalise à nouveau un contrôle optique de la qualité d'image obtenue. Si celle-ci n'est pas satisfaisante, on réalise une nouvelle mesure micrométrique pour évaluer les modifications à apporter sur les rondelles 73, 74 (cales). Ensuite, on desserre et on enlève les vis de blocage et les rondelles cales, on modifie l'épaisseur des rondelles cales selon la mesure précédente, on remonte les vis de blocage, puis on procède à un nouveau contrôle optique. On procède ainsi par itérations successives jusqu'à ce que l'image obtenue après serrage des vis de blocage au couple nominal soit considérée comme satisfaisante. On démonte ensuite l'ensemble des pièces amovibles ayant servi aux réglages comme indiqué ci-dessus.

Le dispositif selon l'invention permet un réglage isostatique suivi d'un blocage isostatique du support 2 par rapport au bâti 1. On obtient ainsi un réglage micrométrique extrêmement fin du positionnement du miroir 3 par rapport au bâti 1 et un blocage de la position du miroir 3 ainsi réglée, compatible avec des accélérations supportées par le dispositif au décollage (typiquement de 30 g ou plus).

Le dispositif représenté sur les figures est applicable pour le positionnement micrométrique d'un miroir asphérique de télescope d'observation de la Terre depuis l'espace. L'invention est néanmoins applicable également pour le positionnement micrométrique de tout autre élément optique selon six degrés de liberté, dans un système optique destiné à être intégré dans un système spatial.

Par ailleurs, les modes de réalisation décrits et représentés sur les figures peuvent faire l'objet de nombreuses variantes. En particulier, d'autres modes de réalisation équivalents du point de vue cinématique et mécanique, des différents moyens de réglage et de blocage peuvent être prévus. Par exemple, les butées micrométriques 9 à 12, 20 à 22 et 33 à 35 peuvent être portées par le support 2 et non par les montures 4, 5, 6. De même, les dispositifs de réglage grossier 30 à 32 peuvent être portés fixes par les montures 4, 5, 6 et non par le support 2. Egalement, les vis de blocage 56, 57 ; 79, 80 ; 81, 82 peuvent venir en appui directement sur la monture et/ou être vissées dans un taraudage de la monture, les rondelles à portées sphériques ou la liaison rotule étant prévues pour coopérer avec le support 2 doté d'un alésage traversé par la vis de blocage. En outre, selon la géométrie de l'élément optique considéré, les positions relatives des trois montures 4, 5, 6 peuvent être différentes de celles représentées et décrites.

## Revendications

1. Dispositif de positionnement micrométrique, par rapport à un bâti (1), d'un support (2) d'élément optique (3) destiné à être intégré dans un système spatial, comprenant trois montures (4, 5, 6) solidaires du bâti (1) et, pour chaque monture (4, 5, 6) :
. des premiers moyens (9 à 12) de réglage en translation selon une première direction, d'une première portion (13 à 15) du support (2) par rapport à la monture (4, 5, 6),
. des deuxièmes moyens (20 à 22) de réglage en translation selon une deuxième direction au moins sensiblement orthogonale à la première direction, d'une deuxième portion (24, 25) du support (2) par rapport à la monture (4, 5, 6),
. des troisièmes moyens (30 à 35) de réglage micrométrique en translation, selon une troisième direction au moins sensiblement orthogonale à la première et à la deuxième direction, d'une troisième portion (36 à 38) du support (2) par rapport à la monture (4, 5, 6), ces troisièmes moyens (30 à 35) de réglage micrométrique comprenant des moyens (33 à 35) de mesure micrométrique de la distance séparant la troisième portion (36 à 38) du support (2) et une portion en regard de la monture (4, 5, 6),
les différents premiers, deuxièmes et troisièmes moyens (9 à 12, 20 à 22, 30 à 35) de réglage des différentes montures (4, 5, 6) étant adaptés pour pouvoir supporter et maintenir de façon isostatique le support (2) et l'élément optique (3) en place par rapport au bâti (1), et pour permettre le réglage isostatique de la position du support (2) par rapport au bâti (1) indépendamment selon six degrés de liberté,
. des moyens (56 à 76, 79 à 82) de blocage en position réglée du support par rapport au bâti (1) comportant :
- au moins une vis (56, 57, 79 à 82) de blocage associée au support (2) et à la monture (4, 5, 6) par l'intermédiaire de moyens (58, 59, 67 à 70) de liaison adaptés pour être compatibles avec différentes positions et orientations relatives pouvant être prises par le support (2) par rapport aux montures (4, 5, 6), compte tenu des plages admises pour les amplitudes de réglage pour les différents moyens de réglage des différentes montures (4, 5, 6), la vis de blocage (56, 57, 79 à 82) et les moyens de liaison étant adaptés pour bloquer, après serrage, la monture (4, 5, 6) et le support (2) l'un par rapport à l'autre en position,
- au moins une cale (73, 74) d'épaisseur déterminée en fonction de la distance mesurée entre la troisième portion (36 à 38) du support (2) et la portion en regard de la monture, cette cale (73, 74) étant placée de façon à combler, avec lesdits moyens de liaison, entièrement la distance séparant la monture (4, 5, 6) du support (2) autour de la vis de blocage (56, 57, 79 à 82), de sorte que la position du support (2) par rapport au bâti (1) peut être réglée au sol indépendamment selon les six degrés de liberté, puis bloquée avec des vis de blocage (56, 57, 79 à 82) permettant de maintenir cette position réglée lors du lancement du système spatial et dans l'espace.

2. Dispositif selon la revendication 1, **caractérisé en ce que** les troisièmes moyens (30 à 35) de réglage micrométrique sont adaptés pour permettre le réglage selon au moins trois précisions distinctes, à savoir une précision grossière, une précision moyenne et une précision fine.

3. Dispositif selon la revendication 2, **caractérisé en ce que** la précision fine est inférieure ou égale à 1 µm.

4. Dispositif selon l'une des revendications 2 et 3, **caractérisé en ce que** lesdites précisions, grossière et moyenne, sont de l'ordre de 100 µm et 10 µm.

5. Dispositif selon l'une des revendications 2 à 4, **caractérisé en ce que** les troisièmes moyens (30 à 35) de réglage micrométrique comprennent un dispositif de réglage grossier (30 à 32) adapté pour permettre le réglage selon la précision grossière, et un dispositif de réglage fin (33 à 35) distinct adapté pour permettre le réglage selon les précisions moyenne et fine.

6. Dispositif selon la revendication 5, **caractérisé en ce que** le dispositif de réglage grossier (30 à 32) est exempt de moyens de mesure de la distance entre la troisième portion (38) du support (2) et la portion en regard de la monture (4, 5, 6).

7. Dispositif selon l'une des revendications 5 et 6, **caractérisé en ce que** le dispositif de réglage grossier (30 à 32) comprend :
- deux organes (44, 47) de rappel élastique adaptés pour exercer des forces de rappel antagonistes sur une première pièce solidaire, soit de la monture (4, 5, 6), soit du support (2),
- un système de réglage vis/écrou (40, 48) de la distance entre une deuxième pièce solidaire respectivement soit du support (2), soit de la monture (4, 5, 6), et une pièce complémentaire (48), l'un (47) des organes de rappel élastique prenant appui sur ladite pièce complémentaire (48) tandis que l'autre (44) organe de rappel élastique prend appui sur cette deuxième pièce.

8. Dispositif selon la revendication 7, **caractérisé en ce que** les deux organes (44, 47) de rappel élastique sont des cylindres de matériau synthétique élastique en compression, et **en ce que** le système vis/écrou (40, 48) est adapté pour que les deux cylindres (44, 47) soient à l'état comprimé en toute position de réglage.

9. Dispositif selon l'une des revendications 7 et 8, **caractérisé en ce que** la raideur de chacun des organes (44, 47) de rappel élastique est adaptée pour permettre le maintien en position du support (2) par rapport au bâti (1) sous l'effet de la gravité mais pour autoriser des réglages par action sur les premiers et deuxièmes moyens de réglage et sur le dispositif de réglage fin (33 à 35) des troisièmes moyens de réglage micrométrique.

10. Dispositif selon l'une des revendications 7 à 9, **caractérisé en ce que** le système vis/écrou (40, 48) comprend une tige (40) traversant un alésage (42) ménagé à travers ladite première pièce, et **en ce que** cet alésage (42) est d'un diamètre interne supérieur au diamètre externe de la tige (40) de façon à permettre les déplacements relatifs et les réglages selon lesdites première et deuxième directions.

11. Dispositif selon l'une des revendications 7 à 10, **caractérisé en ce que** des rondelles (45, 46, 50, 51) en matériau à faible coefficient de frottement statique sont interposées de chaque côté de l'alésage (42), entre chaque extrémité des organes (44, 47) de rappel élastique et une face d'appui en regard de la première pièce, de façon à faciliter les déplacements relatifs selon les première et deuxième directions sous l'effet des premiers et deuxièmes moyens de réglage.

12. Dispositif selon l'une des revendications 7 à 11, **caractérisé en ce que** le dispositif (30 à 32) de réglage fin est adapté pour repousser lesdites première et deuxième pièces à l'encontre des organes (44, 47) de rappel élastiques du dispositif de réglage grossier (30 à 32).

13. Dispositif selon l'une des revendications 5 à 12, **caractérisé en ce que** le dispositif de réglage fin (33 à 35) comprend des moyens de mesure micrométrique de la distance séparant la troisième portion du support et la portion en regard de la monture selon deux sensibilités distinctes, à savoir une sensibilité moyenne et une sensibilité fine.

14. Dispositif selon les revendications 5 et 13, **caractérisé en ce que** les sensibilités moyenne et fine correspondent auxdites précisions moyenne et fine.

15. Dispositif selon l'une des revendications 5 à 14, **caractérisé en ce que** le dispositif de réglage fin (33 à 35) comprend un corps (53) porté par la monture (4, 5, 6) et une tige (54) mobile selon la troisième direction et dont l'extrémité libre vient au contact et en appui sur une portée (55) de la troisième portion (36 à 38) du support (2).

16. Dispositif selon l'une des revendications 5 à 15, **caractérisé en ce que** le dispositif de réglage fin (33 à 35) est constitué d'une butée micrométrique différentielle.

17. Dispositif selon l'une des revendications 1 à 16, **caractérisé en ce que** chaque vis de blocage (56, 57, 79 à 82) s'étend au moins sensiblement selon ladite troisième direction.

18. Dispositif selon l'une des revendications 1 à 17, **caractérisé en ce que** les moyens de liaison comprennent, pour chaque vis de blocage (56, 57, 79 à 82), deux paires (67 à 70) de rondelles à portées sphériques en contact, venant en appui contre des portées (60, 61, 71, 72) orientées en sens opposés, de façon à permettre le serrage de la vis de blocage (56, 57, 79 à 82) avec différentes orientations relatives du support (2) et de la monture (4, 5, 6).

19. Dispositif selon l'une des revendications 1 à 17, **caractérisé en ce que** les moyens de liaison comportent, pour chaque vis de blocage (56, 57, 79 à 82), une liaison rotule.

20. Dispositif selon l'une des revendications 1 à 19, **caractérisé en ce que**, pour chaque vis de blocage (56, 57, 79 à 82), le support (2) comprend un taraudage (58, 59) de réception pour une extrémité de la vis de blocage, et la monture (4, 5, 6) comprend une portée d'appui (60, 61) d'une tête (65, 66) de la vis de blocage, et un alésage (63, 64) traversé par la vis de blocage, et **en ce que** le diamètre interne de l'alésage (63, 64) est supérieur au diamètre externe de la vis de blocage d'une valeur suffisante pour permettre le serrage de la vis de blocage dans le taraudage (58, 59) en toute position du support (2) par rapport au bâti (1) réglée selon les première et deuxième directions.

21. Dispositif selon l'une des revendications 1 à 20, **caractérisé en ce que** les moyens de liaison comportent une paire de rondelles (67, 68) à portées sphériques en contact interposée entre la tête (65, 66) de la vis de blocage (56, 57, 79 à 82) et la portée d'appui (60, 61) de la monture (4, 5, 6), et une paire de rondelles (69, 70) à portées sphériques en contact placée autour de la vis de blocage entre la monture (4, 5, 6) et le support (2).

22. Dispositif selon la revendication 21, **caractérisé en ce qu'**une paire de rondelles (69, 70) à portées sphériques en contact vient au contact d'une portée (71, 72) de la monture (4, 5, 6) orientée vers le support (2).

23. Dispositif selon la revendication 22, **caractérisé en ce que** la cale (73, 74) est une rondelle interposée entre cette paire de rondelles (69, 70) à portées sphériques en contact qui vient au contact d'une portée (71, 72) de la monture, et une portée (75, 76) de la troisième portion (36 à 38) du support (2).

24. Dispositif selon l'une des revendications 1 à 23, **caractérisé en ce que** les premiers (9 à 12) moyens de réglages et/ou les deuxièmes (20 à 22) moyens de réglage comportent une butée micrométrique portée par la monture (4, 5, 6) ou par le support (2), cette butée micrométrique ayant une tige (18) dont l'extrémité libre vient au contact d'une portée (19, 26) en regard respectivement du support (2) ou de la monture (4, 5, 6).

25. Dispositif selon l'une des revendications 1 à 24, **caractérisé en ce que** les trois montures (4, 5, 6) s'étendent globalement selon un même plan au moins sensiblement perpendiculaire à ladite troisième direction, les moyens de réglage selon la première et la deuxième direction étant des moyens de centrage de l'élément optique (3) par rapport aux montures (4, 5, 6).

26. Dispositif selon l'une des revendications 1 à 25, **caractérisé en ce que** les différents moyens (9 à 12, 20 à 22, 30 à 35) de réglage présentent des pièces adaptées pour être amovibles et dissociées du bâti (1) et/ou du support (2) après le blocage en position réglée.

27. Dispositif selon les revendications 7, 24 et 26, **caractérisé en ce que** les organes (44, 47) de rappel élastique et le système vis/écrou (40, 48) du dispositif. de réglage grossier (30 à 32) des troisièmes moyens (30 à 35) de réglage micrométrique, et les différentes butées micrométriques (9 à 12, 20 à 22, 33 à 35) sont montées de façon à être amovibles après le blocage en position réglée.

28. Dispositif selon l'une des revendications 1 à 27, **caractérisé en ce que** les moyens (56 à 76, 79 à 82) de blocage sont dimensionnés de façon à pouvoir supporter une accélération maximum comprise entre 15 g et 60 g dans toute direction sans modification du réglage.

29. Application d'un dispositif selon l'une des revendications 1 à 28, pour le positionnement micrométrique d'un miroir (3) asphérique de télescope à trois miroirs d'observation terrestre depuis l'espace.

## Patentansprüche

1. Vorrichtung zum mikrometrischen Positionieren, relativ zu einem Rahmen (1), einer Halterung (2) eines optischen Elementes (3), das in einem räumlichen System integriert werden soll, umfassend drei mit dem Rahmen (1) einstückige Montagevorrichtungen (4, 5, 6) und für jede Montagevorrichtung (4, 5, 6) :
. erste Regelmittel (9 bis 12) für eine Translationsbewegung eines ersten Teils (13 bis 15) der Halterung (2) in Bezug auf die Montagevorrichtung (4, 5, 6) in einer ersten Richtung,
. zweite Regelmittel (20 bis 22) für Translationsbewegungen eines zweiten Teils (24, 25) der Halterung (2) in Bezug auf die Montagevorrichtung (4, 5, 6) in einer zweiten Richtung wenigstens im Wesentlichen orthogonal zu der ersten Richtung,
. dritte mikrometrische Regelmittel (30 bis 35) für eine Translationsbewegung eines dritten Teils (36 bis 38) der Halterung (2) in Bezug auf die Montagevorrichtung (4, 5, 6) in einer dritten Richtung wenigstens im Wesentlichen orthogonal zu der ersten und der zweiten Richtung, wobei diese dritten mikrometrischen Regelmittel (30 bis 35) Mittel (33 bis 35) zum mikrometrischen Messen des Abstands zwischen dem dritten Teil (36 bis 38) der Halterung (2) und einem Teil gegenüber der Montagevorrichtung (4, 5, 6) umfassen,
wobei die verschiedenen ersten, zweiten und dritten Regelmittel (9 bis 12, 20 bis 22, 30 bis 35) der verschiedenen Montagevorrichtungen (4, 5, 6) so gestaltet sind, dass sie auf isostatische Weise die Halterung (2) und das optische Element (3) an ihrem Ort in Bezug auf den Rahmen (1) tragen und halten können und dass sie eine isostatische Regelung der Position der Halterung (2) in Bezug auf den Rahmen (1) unabhängig in sechs Freiheitsgraden zulassen,
. Mittel (56 bis 76, 79 bis 82) zum Sperren der Halterung in einer geregelten Position in Bezug auf den Rahmen (1), die folgendes umfassen:
- wenigstens eine Arretierschraube (56, 57, 79 bis 82) in Verbindung mit der Halterung (2) und mit der Montagevorrichtung (4, 5, 6) mittels Verbindungsmitteln (58, 59, 67 bis 70), die so gestaltet sind, dass sie mit verschiedenen relativen Positionen und Ausrichtungen kompatibel sind, die die Halterung (2) und die Montagevorrichtungen (4, 5, 6) einnehmen können, unter Berücksichtigung der zulässigen Regelamplitudenbereiche für die verschiedenen Regelmittel der verschiedenen Montagevorrichtungen (4, 5, 6), wobei die Arretierschraube (56, 57, 79 bis 82) und die Verbindungsmittel so gestaltet sind, dass sie nach dem Festziehen die Montagevorrichtung (4, 5, 6) und die Halterung (2) aneinander in ihrer Position arretieren,
- wenigstens eine Beilage (73, 74) mit einer Dicke, die in Abhängigkeit vom gemessenen Abstand zwischen dem dritten Teil (36 bis 38) der Halterung (2) und dem zweiten Teil gegenüber der Montagevorrichtung bestimmt wird, wobei diese Beilage (73, 74) so platziert wird, dass sie, mit den genannten Verbindungsmitteln, den Abstand zwischen der Montagevorrichtung (4, 5, 6) der Halterung (2) um die Arretierschraube (56, 57, 79 bis 82) vollständig ausfüllt, so dass die Position der Halterung (2) in Bezug auf den Rahmen (1) am Boden unabhängig gemäß sechs Freiheitsgraden geregelt und dann mit der Arretierschraube (56, 57, 79 bis 82) arretiert werden kann, so dass diese Einstellposition beim Start des räumlichen Systems und im Raum gehalten werden kann.

2. Vorrichtung nach Anspruch 1, **dadurch gekennzeichnet, dass** die dritten mikrometrischen Regelmittel (30 bis 35) so gestaltet sind, dass sie eine Regelung mit wenigstens drei verschiedenen Präzisionen zulassen, nämlich einer groben Präzision, einer mittleren Präzision und einer feinen Präzision.

3. Vorrichtung nach Anspruch 2, **dadurch gekennzeichnet, dass** die feine Präzision kleiner oder gleich 1 um ist.

4. Vorrichtung nach Anspruch 2 oder 3, **dadurch gekennzeichnet, dass** die genannte grobe und mittlere Präzision in der Größenordnung von 100 µm und 10 µm liegen.

5. Vorrichtung nach einem der Ansprüche 2 bis 4, **dadurch gekennzeichnet, dass** die dritten mikrometrischen Regelmittel (30 bis 35) eine Großregelvorrichtung (30 bis 32), die so gestaltet ist, dass sie eine Regelung mit einer großen Präzision zulässt, und eine getrennte Feinregelvorrichtung (33 bis 35) umfassen, die so gestaltet ist, dass sie eine Regelung mit einer mittleren und einer feinen Präzision zulassen.

6. Vorrichtung nach Anspruch 5, **dadurch gekennzeichnet, dass** die Großregelvorrichtung (30 bis 32) frei von Mitteln zum Messen des Abstands zwischen dem dritten Teil (38) der Halterung (2) und dem Teil gegenüber der Montagevorrichtung (4, 5, 6) ist.

7. Vorrichtung nach Anspruch 5 oder 6, **dadurch gekennzeichnet, dass** die Großregelvorrichtung (30 bis 32) folgendes umfasst:
- zwei elastische Rückstellorgane (44, 47), die so gestaltet sind, dass sie entgegengesetzte Rückstellkräfte auf ein einteiliges erstes Stück, entweder die Montagevorrichtung (4, 5, 6) oder die Halterung (2), aufbringen,
- ein Schraube/Mutter-System (40, 48) zum Regeln des Abstands zwischen einem zweiten einteiligen Stück, jeweils der Halterung (2) bzw. der Montagevorrichtung (4, 5, 6), und einem Ergänzungsstück (48), wobei eines der elastischen Rückstellorgane (47) auf dem genannten Ergänzungsstück (48) zur Anlage kommt, während das andere elastische Rückstellorgan (44) auf diesem zweiten Stück zur Anlage kommt.

8. Vorrichtung nach Anspruch 7, **dadurch gekennzeichnet, dass** die beiden elastischen Rückstellorgane (44, 47) Zylinder aus synthetischem, kompressionselastischem Material sind, und dadurch, dass das Schraube/Mutter-System (40, 48) so gestaltet ist, dass sich die beiden Zylinder (44, 47) in jeder Regelposition in einem komprimierten Zustand befinden.

9. Vorrichtung nach Anspruch 7 oder 8, **dadurch gekennzeichnet, dass** die Steifigkeit jedes der elastischen Rückstellorgane (44, 47) derart ist, dass die Halterung (2) in Bezug auf den Rahmen (1) unter Schwerkraft gehalten werden kann, aber dass eine Regelung durch Einwirkung auf die ersten und zweiten Regelmittel und auf die Feinregelvorrichtung (33 bis 35) der dritten mikrometrischen Regelmittel möglich ist.

10. Vorrichtung nach einem der Ansprüche 7 bis 9, **dadurch gekennzeichnet, dass** das Schraube/Mutter-System (40, 48) eine Stange (40) umfasst, die durch eine Bohrung (42) durch das genannte erste Stück verläuft, und dadurch, dass der Innendurchmesser dieser Bohrung (42) größer ist als der Außendurchmesser der Stange (40), damit die relativen Verschiebungen und die Regelungen in der genannten ersten und der genannten zweiten Richtung ermöglicht werden.

11. Vorrichtung nach einem der Ansprüche 7 bis 10, **dadurch gekennzeichnet, dass** sich Scheiben (45, 46, 50, 51) aus einem Material mit einem geringen statischen Reibungswiderstand so auf beiden Seiten der Bohrung (42) zwischen jedem Ende der elastischen Rückstellorgane (44, 47) und einer Anlagefläche gegenüber dem ersten Stück befinden, dass die relativen Verschiebungen in der ersten und der zweiten Richtung unter der Wirkung des ersten und des zweiten Regelmittels erleichtert werden.

12. Vorrichtung nach einem der Ansprüche 7 bis 11, **dadurch gekennzeichnet, dass** die Feinregelvorrichtung (30 bis 32) so gestaltet ist, dass sie das genannte erste und das genannte zweite Stück gegen die elastischen Rückstellorgane (44, 47) der Großregelvorrichtung (30, 32) drückt.

13. Vorrichtung nach einem der Ansprüche 5 bis 12, **dadurch gekennzeichnet, dass** die Feinregelvorrichtung (33 bis 35) Mittel zum mikrometrischen Messen des Abstands zwischen dem dritten Teil der Halterung und dem Teil gegenüber der Montagevorrichtung mit zwei verschiedenen Empfindlichkeiten umfasst, nämlich einer mittleren und einer feinen Empfindlichkeit.

14. Vorrichtung nach Ansprüche 5 und 13, **dadurch gekennzeichnet, dass** die mittlere und die feine Empfindlichkeit der genannten mittleren und der genannten feinen Präzision entsprechen.

15. Vorrichtung nach einem der Ansprüche 5 bis 14, **dadurch gekennzeichnet, dass** die Feinregelvorrichtung (33 bis 35) einen Körper (53) umfasst, der von der Montagevorrichtung (4, 5, 6) getragen wird, und eine Stange (54), die in der dritten Richtung beweglich ist und deren freies Ende in Kontakt mit einer Auflagefläche (55) des dritten Teils (36 bis 38) der Halterung (2) kommt und auf dieser aufliegt.

16. Vorrichtung nach einem der Ansprüche 5 bis 15, **dadurch gekennzeichnet, dass** die Feinregelvorrichtung (33 bis 35) von einem anderen mikrometrischen Widerlager gebildet wird.

17. Vorrichtung nach einem der Ansprüche 1 bis 16, **dadurch gekennzeichnet, dass** jede Arretierschraube (56, 57, 79 bis 82) wenigstens im Wesentlichen in der genannten dritten Richtung verläuft.

18. Vorrichtung nach einem der Ansprüche 1 bis 17, **dadurch gekennzeichnet, dass** die Verbindungsmittel für jede Arretierschraube (56, 57, 79 bis 82) zwei Kugelscheibenpaare (67 bis 70) umfassen, die auf in entgegengesetzte Richtung ausgerichteten Auflageflächen (60, 61, 71, 72) aufliegen, um das Festziehen der Arretierschraube (56, 57, 79 bis 82) mit anderen relativen Ausrichtungen der Halterung (2) und der Montagevorrichtung (4, 5, 6) zuzulassen.

19. Vorrichtung nach einem der Ansprüche 1 bis 17, **dadurch gekennzeichnet, dass** die Verbindungsmittel für jede Arretierschraube (56, 57, 79 bis 82) eine Kugelverbindung umfassen.

20. Vorrichtung nach einem der Ansprüche 1 bis 19, **dadurch gekennzeichnet, dass** die Halterung (2) für jede Arretierschraube (56, 57, 79 bis 82) ein Innengewinde (58, 59) zur Aufnahme eines Endes der Arretierschraube umfasst, und die Montagevorrichtung (4, 5, 6) eine Auflagefläche (60, 61) eines Kopfes (65, 66) der Arretierschraube und eine Bohrung (63, 64), durch die Arretierschraube umfasst, und dadurch, dass der Innendurchmesser der Bohrung (63, 64) um einen Wert größer als der Außendurchmesser der Arretierschraube ist, der ausreicht, um ein Festziehen der Arretierschraube in dem Innengewinde (58, 59) in jeder Position der Halterung (2) in Bezug auf den Rahmen (1) zu ermöglichen, die in der ersten und der zweiten Richtung geregelt wurde.

21. Vorrichtung nach einem der Ansprüche 1 bis 20, **dadurch gekennzeichnet, dass** die Verbindungsmittel ein Paar Kontaktkugelscheiben (67, 68) zwischen dem Kopf (65, 66) der Arretierschraube (56, 57, 79 bis 82) und der Auflagefläche (60, 61) der Montagevorrichtung (4, 5, 6) sowie ein Paar Kontaktkugelscheiben (69, 70) um die Arretierschraube zwischen der Montagevorrichtung (4, 5, 6) und der Halterung (2) umfassen.

22. Vorrichtung nach Anspruch 21, **dadurch gekennzeichnet, dass** ein Paar Kontaktkugelscheiben (69, 70) mit einer Auflagefläche (71, 72) der Montagevorrichtung (4, 5, 6) in Kontakt kommt, die in Richtung auf die Halterung (2) ausgerichtet ist.

23. Vorrichtung nach Anspruch 22, **dadurch gekennzeichnet, dass** die Beilage (73, 74) eine Scheibe ist, die sich zwischen diesem Paar Kugelkontaktscheiben (69, 70), das mit einer Auflagefläche (71, 72) der Montagevorrichtung in Kontakt kommt, und einer Auflagefläche (75, 76) des dritten Teils (36 bis 38) der Halterung (2) befindet.

24. Vorrichtung nach einem der Ansprüche 1 bis 23, **dadurch gekennzeichnet, dass** die ersten Regelmittel (9 bis 12) und/oder die zweiten Regelmittel (20 bis 22) ein mikrometrisches Widerlager umfassen, das von der Montagevorrichtung (4, 5, 6) oder von der Halterung (2) getragen wird, wobei dieses mikrometrische Widerlager eine Stange (18) hat, deren freies Ende mit einer Auflagefläche (19, 26) jeweils gegenüber der Halterung (2) oder der Montagevorrichtung (4, 5, 6) in Kontakt kommt.

25. Vorrichtung nach einem der Ansprüche 1 bis 24, **dadurch gekennzeichnet, dass** die drei Montagevorrichtungen (4, 5, 6) allgemein in derselben Ebene wenigstens im Wesentlichen lotrecht zu der genannten dritten Richtung verlaufen, wobei die Regelmittel in der ersten und der zweiten Richtung Zentriermittel für das optische Element (3) in Bezug auf die Montagevorrichtung (4, 5, 6) sind.

26. Vorrichtung nach einem der Ansprüche 1 bis 25, **dadurch gekennzeichnet, dass** die verschiedenen Regelmittel (9 bis 12, 20 bis 22, 30 bis 35) Stücke aufweisen, die so gestaltet sind, dass sie nach der Arretierung in der Regelposition lösbar und von dem Rahmen (1) und/oder der Halterung (2) getrennt sind.

27. Vorrichtung nach den Ansprüchen 7, 24 und 26, **dadurch gekennzeichnet, dass** die elastischen Rückstellorgane (44, 47) und das Schraube/Mutter-System (40, 48) der Großregelvorrichtung (30 bis 32) der dritten mikrometrischen Regelmittel (30 bis 35) und die verschiedenen mikrometrischen Widerlager (9 bis 12, 20 bis 22, 33 bis 35) so montiert sind, dass sie nach der Arretierung in der geregelten Position lösbar sind.

28. Vorrichtung nach einem der Ansprüche 1 bis 27, **dadurch gekennzeichnet, dass** die Arretiermittel (56 bis 76, 79 bis 82) so dimensioniert sind, dass sie eine maximale Beschleunigung zwischen 15 g und 60 g in jeder Richtung ohne Modifikation der Regelung aushalten können.

29. Vorrichtung nach einem der Ansprüche 1 bis 28 für die mikrometrische Positionierung eines asphärischen Teleskopspiegels (3) mit drei terrestrischen Raumbeobachtungsspiegeln.

## Claims

1. A device for the micrometric positioning, with respect to a frame (1), of a support (2) for an optical element (3) designed to be integrated into a space system, comprising three mountings (4, 5, 6) secured to the frame (1) and, for each mounting (4, 5, 6):
. first means (9 to 12) of adjustment in translation along a first direction, of a first portion (13 to 15) of the support (2) with respect to the mounting (4, 5, 6),
. second means (20 to 22) of adjustment in translation along a second direction, at least substantially orthogonal to the first direction, of a second portion (24, 25) of the support (2) with respect to the mounting (4, 5, 6),
. third means (30 to 35) of micrometric adjustment in translation along a third direction, at least substantially orthogonal to the first and the second direction, of a third portion (36 to 38) of the support (2) with respect to the mounting (4, 5, 6), these third means (30 to 35) of micrometric adjustment including means (33 to 35) for the micrometric measurement of the distance separating the third portion (36 to 38) of the support (2) and a facing portion of the mounting (4, 5, 6),
the different first, second and third means of adjustment (9 to 12, 20 to 22, 30 to 35) of the different mountings (4, 5, 6) being adapted so as to be able to support and hold in an isostatic manner the support (2) and the optical element (3) in place with respect to the frame (1), and to permit isostatic adjustment of the position of the support (2) with respect to the frame (1) independently with six degrees of freedom,
. means (56 to 76, 79 to 82) for locking the support in an adjusted position with respect to the frame (1) comprising:
- at least one locking screw (56, 57, 79 to 82) associated with the support (2) and the mounting (4, 5, 6) via connecting means (58, 59, 67 to 70) adapted so as to be compatible with different relative positions and orientations which can be assumed by the support (2) with respect to the mountings (4, 5, 6), taking into account the accepted ranges for the amplitudes of adjustment for the different means of adjustment of the different mountings (4, 5, 6), the locking screw (56, 57, 79 to 82) and the connecting means being adapted so as to lock, after tightening, the mounting (4, 5, 6) and the support (2) in position with respect to each other,
- at least one shim (73, 74) of which the thickness is determined as a function of the distance measured between the third portion (36 to 38) of the support (2) and the facing portion of the mounting, this shim (73, 74) being placed so as to fill entirely, with the said connecting means, the distance separating the mounting (4, 5, 6) from the support (2) about the locking screw (56, 57, 79 to 82), so that the position of the support (2) with respect to the frame (1) may be adjusted on the ground independently with six degrees of freedom, and then locked with locking screws (56, 57, 79 to 82) enabling this adjusted position to be maintained during the launch of the space system and in space.

2. The device as claimed in claim 1, **characterized in that** the third means (30 to 35) of micrometric adjustment are adapted so as to permit adjustment to at least three distinct precisions, namely a coarse precision, an average precision and a fine precision.

3. The device as claimed in claim 2, **characterized in that** the fine precision is less than or equal to 1 µm.

4. The device as claimed in one of claims 2 and 3, **characterized in that** the said coarse and medium precisions are of the order of 100 µm and 10 µm.

5. The device as claimed in one of claims 2 to 4, **characterized in that** the third means (30 to 35) of micrometric adjustment include a coarse adjustment device (30 to 32) adapted so as to permit adjustment to the coarse precision and a distinct fine adjustment device (33 to 35) adapted so as to permit adjustment to medium and fine precisions.

6. The device as claimed in claim 5, **characterized in that** the coarse adjustment device (30 to 32) has no means for measuring the distance between the third portion (38) of the support (2) and the facing portion of the mounting (4, 5, 6).

7. The device as claimed in one of claims 5 and 6, **characterized in that** the coarse adjustment device (30 to 32) comprises:
- two elastic return devices (44, 47) adapted so as to exert opposing return forces on a first part which is secured either to the mounting (4, 5, 6) or to the support (2),
- a screw/nut system (40, 48) for adjusting the distance between a second part which is secured respectively either to the support (2) or to the mounting (4, 5, 6) and a complementary part (48), one (47) of the elastic return devices pressing on the said complementary part (48) while the other (44) elastic return device presses on this second part.

8. The device as claimed in claim 7, **characterized in that** the two elastic return devices (44, 47) are cylinders made of an elastic synthetic material in compression and the screw/nut system (40, 48) is adapted so that the two cylinders (44, 47) are in the compressed state in any adjustment position.

9. The device as claimed in one of claims 7 and 8, **characterized in that** the stiffness of each of the elastic return devices (44, 47) is adapted so as to enable the support (2) to be held in position with respect to the frame (1) under the effect of gravity but so as to permit adjustments by action on the first and second means of adjustment and on the fine adjustment device (33 to 35) of the third micrometric means of adjustment.

10. The device as claimed in one of claims 7 to 9, **characterized in that** the screw/nut system (40, 48) comprises a rod (40) passing through a bore (42) provided through the said first part, and this bore (42) has an internal diameter greater than the external diameter of the rod (40) so as to permit relative movements and adjustments along the said first and second directions.

11. The device as claimed in one of claims 7 to 10, **characterized in that** washers (45, 46, 50, 51) made of a material with a low static coefficient of friction are interposed from each side of the bore (42), between each end of the elastic return devices (44, 47), and an opposite supporting face of the first part, so as to facilitate relative movements along the first and second directions under the effect of the first and second means of adjustment.

12. The device as claimed in one of claims 7 to 11, **characterized in that** the fine adjustment device (30 to 32) is adapted so as to push back the said first and second parts against the elastic return devices (44, 47) of the coarse adjustment device (30 to 32).

13. The device as claimed in one of claims 5 to 12, **characterized in that** the fine adjustment device (33 to 35) includes means for the micrometric measurement of the distance separating the third portion of the support and the facing portion of the mounting, with two distinct sensitivities, namely a medium sensitivity and a fine sensitivity.

14. The device as claimed in claims 5 and 13, **characterized in that** the average and fine sensitivities correspond to the said medium and fine precisions.

15. The device as claimed in one of claims 5 to 14, **characterized in that** the fine adjustment device (33 to 35) includes a body (53) carried by the mounting (4, 5, 6) and a rod (54) which can move along the third direction and of which the free end comes into contact pressing on the bearing surface (55) of the third portion (36, 38) of the support (2).

16. The device as claimed in one of claims 5 to 15, **characterized in that** the fine adjustment device (33 to 35) consists of a differential micrometric stop.

17. The device as claimed in one of claims 1 to 16, **characterized in that** each locking screw (56, 57, 79 to 82) extends at least substantially along the said third direction.

18. The device as claimed in one of claims 1 to 17, **characterized in that** the connecting means comprise, for each locking screw (56, 57, 79 to 82), two pairs of washers (67 to 70) with spherical contacting bearing surfaces, pressing against bearing surfaces (60, 61, 71, 72) oriented in opposite directions so as to enable the locking screw (56, 57, 79 to 82) to be tightened with different orientations relative to the support (2) and to the mounting (4, 5, 6).

19. The device as claimed in one of claims 1 to 17, **characterized in that** the connecting means comprise, for each locking screw (56, 57, 79 to 82), a ball coupling.

20. The device as claimed in one of claims 1 to 19, **characterized in that**, for each locking screw (56, 57, 79 to 82), the support (2) includes a tapping (58, 59) for receiving an end of the locking screw, and the mounting (4, 5, 6) includes a bearing surface (60, 61) for supporting a head (65, 66) of the locking screw, and a bore (63, 64) traversed by the locking screw, and **in that** the internal diameter of the bore (63, 64) is greater than the external diameter of the locking screw by an amount sufficient to enable the locking screw to be tightened in the tapping (58, 59) in any position of the support (2) with respect to the frame (1) adjusted along the first and second directions.

21. The device as claimed in one of claims 1 to 20,**characterized in that** the connecting means include a pair of washers (67, 68) with spherical contacting bearing surfaces interposed between the head (65, 66) of the locking screw (56, 57, 79 to 82) and the bearing surface (60, 61) of the mounting (4, 5, 6), and a pair of washers (69, 70) with spherical contacting bearing surfaces placed around the locking screw between the mounting (4, 5, 6) and the support (2).

22. The device as claimed in claim 21, **characterized in that** a pair of washers (69, 70) with spherical contacting bearing surfaces come into contact with a bearing surface (71, 72) of the mounting (4, 5, 6) oriented towards the support (2).

23. The device as claimed in claim 22, **characterized in that** the shim (73, 74) is a washer interposed between this pair of washers (69, 70) with spherical contacting bearing surfaces, which comes into contact with a bearing surface (71, 72) of the mounting and a bearing surface (75, 76) of the third portion (36 to 38) of the support (2).

24. The device as claimed in one of claims 1 to 23, **characterized in that** the first means of adjustment (9 to 12) and/or the second means of adjustment (20 to 22) include a micrometric stop carried by the mounting (4, 5, 6) or by the support (2), this micrometric stop having a rod (18) of which the free end comes into contact with a facing bearing surface (19, 26) of the support (2) or of the mounting (4, 5, 6) respectively.

25. The device as claimed in one of claims 1 to 24, **characterized in that** the three mountings (4, 5, 6) extend overall in the same plane at least substantially perpendicular to the said third direction, the means of adjustment along the first and second directions being means for centering the optical element (3) with respect to the mountings (4, 5, 6).

26. The device as claimed in one of claims 1 to 25, **characterized in that** the different means of adjustment (9 to 12, 20 to 22, 30 to 35) have parts adapted so as to be detachable and dissociated from the frame (1) and/or the support (2) after locking in the adjusted position.

27. The device as claimed in claims 7, 24 and 26, **characterized in that** the elastic return devices (44, 47) and the screw/nut system (40, 48) of the coarse adjustment device (30 to 32) of the third means of micrometric adjustment (30 to 35) and the different micrometric stops (9 to 12, 20 to 22, 33 to 35) are mounted so as to be detachable after locking in the adjusted position.

28. The device as claimed in one of claims 1 to 27, **characterized in that** the means of locking (56 to 76, 79 to 82) are dimensioned so as to be able to withstand a maximum acceleration of between 15 g and 60 g in any direction without the adjustment changing.

29. An application of a device as claimed in one of claims 1 to 28, for the micrometric positioning of an aspherical mirror (3) of a telescope with three mirrors for observing earth from space.
